# EUROPEAN PATENT SPECIFICATION

(11) **EP 4 194 352 B1**
(45) Date of publication and mention of the grant of the patent: **12.02.2025**
(21) Application number: 22191220.7
(22) Date of filing: 19.08.2022
(51) Int. Cl.: B65D 1/36, B65D 5/50, B65D 81/133, B65D 85/68

(54) **IMPROVED PACKAGING FOR PACKING TWO OR MORE VEHICLE BATTERY COVERS**
VERBESSERTE VERPACKUNG ZUM VERPACKEN VON ZWEI ODER MEHR FAHRZEUGBATTERIEABDECKUNGEN
EMBALLAGE AMÉLIORÉ POUR EMBALLER AU MOINS DEUX COUVERCLES DE BATTERIE DE VÉHICULE

(30) Priority: 24.08.2021 ES 202130808
(43) Date of publication of application: 14.06.2023
(73) Proprietor: Defta, 77700 Chessy (FR)
(72) Inventor: VERASTEGUI JURADO, David Miguel, Chessy (FR); CARDARELLI, Piero, Chessy (FR)
(74) Representative: Ponti & Partners, S.L.P

(56) References cited:
- EP-A1- 0 916 584
- US-A1- 2005 133 391
- US-A1- 2006 175 225

## Description

### Object of the invention

The present patent application relates to an improved packaging for packaging two or more vehicle battery covers according to claim 1, which incorporates remarkable innovations and advantages over the packaging known today. In particular, the improved packaging for packing more than one cover of a battery for a vehicle is made of cardboard or other material and is characterized by allowing to reduce the packing space used by each cover.

### Background of the invention

Currently, vehicle battery covers, which are made up of a stamped sheet metal, are transported or stored in batches or groups inside boxes or containers of standard sizes, for example, from the factory or installation where they are manufactured to another location where they are mounted on each battery.

The battery covers to which this invention relates are generally metal sheets with a substantially flat configuration, although they may present ridges, and have a low thickness and a substantially rectangular contour, although their configuration may vary depending on the battery model in question.

The covers may additionally have one or more throughway openings so that different battery elements can pass through them, as well as different spatial shapes: flat, and concave or convex in different positions.

The battery covers are stored inside boxes or containers of large dimensions and standard measures (e.g. 0.930 m high, and a base of 1.2×1 m), for transport. In this specification the term box or container will be used interchangeably to refer to a box of standard dimensions, or of specific values for the part to be stored, which is preferably made of metal, cardboard or plastic. Specifically, a set of covers is placed on some tray-like packagings and the packagings are stacked on top of each other until they occupy the full height of the box or container. The function of each tray-like packaging is to protect a group of covers so that they cannot be damaged during transport or storage. Each tray-like packaging can hold several covers, for example, two, three, four or more covers, which are arranged in different positions and orientations. Depending on the configuration, size and distribution in the packaging of each cover model, several trays may fit in the same packaging (e.g. 10, 15 ...) resulting in the total number of covers per container or packaging.

There is currently a type of packaging specifically designed to attach to this type of parts consisting of a sheet of paper or cardboard, for example, corrugated cardboard. In this case, the tray can have some recesses with dimensions and configuration in different interior positions of the tray, in which the covers are placed, one cover in each recess. Each of the recesses has specific dimensions that correspond to the dimensions of each cover. In this way, each cardboard tray packs and protects a group of covers, which are arranged at the same height inside the sheet, since the dies are of the same dimensions. As previously mentioned, the operator stacks one sheet of cardboard on top of the other inside the container or the packaging box.

For example, document EP0916584A1 discloses a packaging tray comprising position determining concave portions for determining, when a plurality of packaging trays are stacked, a stacking position of each packaging tray with respect to at least another packaging tray placed above or beneath. Each bottom portion of the position determining concave portion in the depth direction is made slightly smaller than the opening portion of the same. Consequently, when a plurality of the packaging trays are stacked, the bottom portions of the position determining concave portions of the upper packaging tray slightly fit into the opening portions of the corresponding position determining concave portions of the lower packaging tray through point contact or linear contact, whereby the stacking position of the upper packaging tray with respect to the lower packaging tray is determined fixedly.

It should be noted that packaging in this type of automotive parts is a critical factor, since it increases the total cost of the product (that is, the cost of the cover plus the cost of its packaging plus the cost of its transport), in addition to conditioning the useful transport space of this type of parts in a truck, or other standard type of transport, and the volumes of storage in the plant, both of the customer and the manufacturer of the covers.

It is therefore necessary to offer an alternative to the prior art that covers the gaps found therein, providing improved packaging that manages to reduce the packaging space used by each cover, which reduces the total cost of the product.

### Description of the invention

The object of the present invention is to provide an improved packaging suitable for packing two or more vehicle battery covers, which resolves the aforementioned drawbacks, presenting the advantages described below.

According to a first aspect, the present invention provides a packaging for vehicle battery covers, comprising, in a manner known as such:
- a sheet or tray, provided on one of its faces with two or more recesses, each recess configured to house and fasten therein a respective cover, wherein each recess comprises a support surface for receiving a respective cover.

Unlike battery cover packs preferably used in vehicles already known in the state of the art, the one of the present invention is characterized in that :
- the support surface of at least one first recess is arranged at a depth less than the depth of the support surface of a recess arranged at a position adjacent to the first recess, so that when a first cover is arranged in the first recess and another respective cover in the adjacent recess the two covers are arranged at different heights, superimposed one with respect to the other, and
the support surface of the first recess is displaced in the two directions of the longitudinal "X" and transverse "Y" axes with respect to the support surface of the adjacent recess; so that when a first cover is arranged in the first recess and another respective cover in the adjacent recess there is a partial overlap in the "X-Y" plane of these two adjacent covers.

The rotation of these two covers within the packaging is prevented by the side walls in the corresponding recess that fasten each cover in the "X-Y" plane. Thus, the existence of these side walls in each recess is a relevant aspect.

The term "sheet" or "tray" shall be used interchangeably in this specification to refer to the same element.

The term "adjacent" is understood to be a position contiguous or located in the vicinity, which can be both in the longitudinal direction "X" and in the transverse direction "Y". Thus, the recesses arranged in "adjacent" positions within the packaging are separated by a certain distance on the "X" axis or on the "Y" axis, where this distance will be as small as possible in order to take advantage of the space of the packaging to receive the maximum number of covers in each packaging.

The great advantageous technical effect of the packaging proposed by this invention is that it provides the following main advantages:
- Savings in the packing volume used for each cover.
- Decrease in operator time when changing the box/container, as more covers fit in a standard box/container.
- Decrease in the unit cost of the packaging.
- Reduction of storage space-volume.
- Reduction of transport time, volume and cost.

Preferably the sheet or tray is made of cardboard, although alternatively other materials are perfectly possible without altering the essence of the present invention, such as a recycled material or plastic.

The position of the support surface of the first recess is offset in the "X" and "Y" axes with respect to the position of the support surface of the adjacent recess, so that there is a slight overlap of the covers arranged in these two recesses in the "X" direction, where the partial overlap in the direction of the "X" axis of two covers arranged in two adjacent recesses is less than 50% of the size of the major side of the cover in the direction of the "X" axis, and the partial overlap in the "Y" direction of two covers arranged in two adjacent recesses is more than 50% of the size of the minor side of the cover in the direction of the "Y" axis.

In a possible embodiment of the invention, the percentage of overlap of the two covers arranged in two adjacent recesses is lower in the direction of the "X" axis than the percentage of overlap in the direction of the "Y" axis.

According to a first example of fabrication of the sheet of the present invention, the same is made of corrugated cardboard. Cardboard is a thick and hard sheet composed of several layers of cellulose, such as paper pulp, rag pulp, old paper or other materials that, in the wet state, adhere to each other by compression and are then dried by evaporation. The more layers are added, the thicker the corrugated board becomes and, depending on their number, there is single, double or triple channel corrugated board. In the case of the present invention, the corrugated board may be single, double or triple channel.

According to an alternative example of fabrication of the sheet of the present invention, the same is manufactured from honeycomb cardboard, which is a variant of corrugated cardboard. Honeycomb cardboard is characterized in that the structure, instead of being undulating, adopts a hexagonal structure similar to that of a honeycomb. Honeycomb cardboard provides great rigidity, which is very advantageous for the sheet of the present invention.

According to a first embodiment of the present invention, the packaging comprises four different recesses for receiving four covers, one cover in each recess, where these four recesses are arranged in pairs. In this particular case, the covers have a substantially rectangular configuration. A first pair of recesses is arranged on a first side of the tray, where the first recess is slightly displaced in the longitudinal direction "X" and also displaced in the transverse direction "Y" with respect to the second recess of this first pair of recesses, so that the covers arranged in this first pair of recesses are partially overlapped in the plane "X-Y". In the vertical direction "Z" the first recess of this first pair is in a upper position in height (that is, on the axis "Z") with respect to the second recess of this first pair, so that the cover resting on the support surface of this first recess is in a upper position in height with respect to the cover resting on the support surface of the second recess, being superimposed one on the other; which allows the partial overlap in the "X-Y" plane. The distance on the "Z" axis is defined, in each case, according to a sufficient separation so that the covers, if moved vertically, do not rub and/or become damaged. Furthermore, in these arrangements the height of the recess where a cover is placed is such as to allow the accommodation of the cover and, in turn, the upper tray, for its lower flat part, fixes this cover, preventing its vertical movement. For the upper tray, in case of need an empty tray can be placed as a protector. And the other pair of recesses has the same configuration and is arranged in the same arrangement one with respect to the other recess as the first pair of recesses, but arranged in another part of the packaging, where this other part is arranged offset with respect to the part where the first pair of recesses are located at a certain distance "d" in the transverse direction "Y".

The recess that is in a lower position in height is arranged at a height with respect to the other recess, such that, when the covers are placed in said recess, the covers do not touch each other. That is, there remains a minimum gap between the upper surface of the cover disposed at the bottom with respect to the lower surface of the cover disposed at the top.

According to a second embodiment of the present invention, the packaging comprises five different recesses for receiving five covers, one in each recess, where two of the recesses are arranged in one part of the packaging, while the other three recesses are arranged in another part of the packaging. In this second embodiment, the first two recesses are arranged in the same manner as in the first embodiment of four covers. However, the other pair of three recesses is different than in the first embodiment. In this second embodiment, the three recesses are arranged in an orientation perpendicular to the first pair of recesses, where these three recesses are arranged offset with respect to the part where the first pair of recesses are located at a certain distance "d" in the transverse direction "Y".

In the vertical direction "Z", the second recess (which is in an intermediate position) of the three recesses is in a upper position in height (that is, in the "Z" axis) with respect to the first and third recesses, so that the cover resting on the support surface of this the second intermediate recess is in a upper position in height with respect to the respective covers resting on the support surface of the first and third recesses. The supporting surface of the first and third recess is arranged at the same height. Thus, the covers placed in the three recesses are superimposed one adjacent cover with respect to the other, which allows for the partial overlap in the "X-Y" plane. In this embodiment, the percentage of partial overlap in the direction of the "X" axis is less than the percentage of partial overlap in the direction of the "Y" axis. Furthermore, the partial overlap in the direction of the "Y" axis of the cover that is in the first recess with respect to the intermediate recess is not the same as the partial overlap in the "Y" direction of the cover that is in the third recess with respect to the intermediate recess, so that the first cover and the third cover are in slightly offset positions in the "Y" axis. The first recess of the three recesses is slightly displaced in the longitudinal direction "X" and also slightly displaced in the transverse direction "Y" with respect to the second recess of this first pair of recesses, so that the covers arranged in this first pair of recesses are partially overlapped in the "X-Y" plane. Note that with this arrangement the movements of the covers during transport on the three axes, X, Y and Z, are retained.

Preferably, each recess can comprise a throughway opening, where, also in an overlapping way, screws or other systems or elements of the cover protruding on the "Z" axis are housed in said opening, so that this extra height is contained in the thickness of the upper tray, thus minimizing the thickness of each tray, since the height of the projections is distributed between the two adjacent trays, upper and lower, with the consequent increase in the number of trays that can be placed at height in the container.

According to a first exemplary embodiment, the throughway opening is a window of rectangular dimensions.

Preferably, the sheet of the present invention has a bottom face formed by a flat surface.

Alternatively, this arrangement can be extended in the case of covers with nonplanar upper and/or lower surfaces, for example, bent or curved, thus forming the trays of the present invention with bent upper and/or lower surfaces (i.e. curved), in such a way that the trays allow overlapping in the three directions X, Y and Z.

Preferably, the sheet of the present invention presents a base or plan of substantially rectangular contour, although another similar outer geometric shape may be possible. In other words, it has an upper and lower face with a substantially rectangular contour and four lateral faces. The various recesses occupy most of the space of the upper face of the sheet, that is to say that only an outer perimeter portion of the upper face of the sheet is free of recesses, as well as a central strip that extends longitudinally in the "X" direction. The sheet of the present invention has a low thickness (i.e. their respective side faces have a short length) compared to the dimensions on the "X" and "Y" axes of its base, where the thickness is constant throughout the outer part of the sheet. This regular, square, rectangular or other, outer geometric shape of the sheet of the present invention has the main purpose of allowing an exact positioning by means of physical stops of the empty trays in a receptacle in a simple way for an operator and which, in turn, allows an accurate manipulation by a robot and automated systems.

Also preferably, the sheet of the present invention can have its four vertices chamfered to help the placement of the tray of the present invention by a robot or automated system in the container, avoiding the corners of the pillars and the hinges thereof.

Each recess has a lower support surface with dimensions such as to receive a battery cover with a substantially rectangular base that fits snugly. In other words, depending on the outer dimensions of each battery cover, the outer contour of the recesses will vary in order to receive each model of cover snugly. Each recess also has respective side walls.

According to another embodiment of the present invention, the packaging comprises more than five different recesses for receiving one cover in each recess.

A possible process for mounting the covers and packaging comprises the following main steps:
- Manufacture of a group of packages stored in a package container.
- Manufacture of a set of covers in an assembly cell or with tooling.
- Placement of the screws in the different holes of each cover.
- A robot arm takes a packaging from the packaging container by means of vacuum suction cups and deposits it inside the cover container.
- Subsequently, a robot arm takes a cover from the tooling or assembly cell with the screws installed and deposits it inside the container of covers precisely in one of the packing recesses.
- The robot arm takes the next cover from the tooling or assembly cell with the screws installed and deposits it inside the container of covers precisely in the next recess of the packaging, and so on until all the covers of a packaging are placed.
- Then a robot arm takes the next packaging from the packaging container by means of vacuum suction cups and deposits it inside the cover container over the first packaging with the covers, and continues in the same manner as explained above until all the covers of the second packaging are positioned, and so on until all the stacked packaging and covers are placed until the entire container is filled with covers.

According to this possible process of mounting the covers and packaging, it is noted that if the cardboard were porous then it would not be captured correctly with the suction cups of the robot arm. For this reason, the material of the cardboard must be non-porous.

For a better understanding of the description made herein, a set of drawings has been provided wherein, schematically and solely by way of a non-limiting example, practical examples of an embodiment of the packaging for vehicle battery covers are represented.

### Brief description of the drawings

Figure 1 is a perspective view of an example of a battery cover for a vehicle to be packaged.
Figure 2 is a top plan view of an example of a battery cover for a vehicle to be packaged illustrated in figure 1.
Figure 3 is a bottom plan view of an example of a battery cover for a vehicle to be packaged illustrated in figure 1.
Figure 4 is a front elevation view of an example of a battery cover for a vehicle to be packaged illustrated in figure 1.
Figure 5 is a side elevation view of an example of a battery cover for a vehicle to be packaged illustrated in figure 1.
Figure 6 is a top perspective view of a first embodiment of the packaging configured to receive four battery covers of a vehicle, according to the present invention.
Figure 7 is a top plan view of the first embodiment of the packaging shown in figure 6.
Figure 8 is a bottom plan view of the first embodiment of the packaging shown in figure 6.
Figure 9 is a front elevation view of the first embodiment of the packaging shown in figure 6.
Figure 10 is a side elevation view of the first embodiment of the packaging shown in figure 6.
Figure 11 is a top perspective view of the first embodiment of the packaging illustrated in figures 6 to 10 with four vehicle battery covers according to the first example illustrated in figures 1 to 5 arranged in each of the four packaging recesses, according to the present invention.
Figure 12 is a top plan view of the first embodiment of the packaging with four covers mounted on the packaging illustrated in figure 11.
Figure 13 is a bottom plan view of the first embodiment of the packaging with four covers mounted on the packaging illustrated in figure 11.
Figure 14 is the same top perspective view as figure 11 but sectioned by the A-A' plane.
Figure 15 is a view sectioned by the A-A plane of figure 14.
Figure 16 is the same top perspective view as figure 11 but sectioned by a plane B-B'.
Figure 17 is a top perspective view of a second embodiment of the packaging configured to receive five battery covers of a vehicle, according to the present invention.
Figure 18 is a top plan view of the second embodiment of the packaging shown in figure 17.
Figure 19 is a bottom plan view of the second embodiment of the packaging shown in figure 17.
Figure 20 is a front elevation view of the second embodiment of the packaging shown in figure 17.
Figure 21 is a side elevation view of the second embodiment of the packaging shown in figure 17.
Figure 22 is the same top perspective view of the second embodiment of the packaging shown in figure 17 but sectioned by a plane C-C'.

### Description of some examples of embodiment of the invention

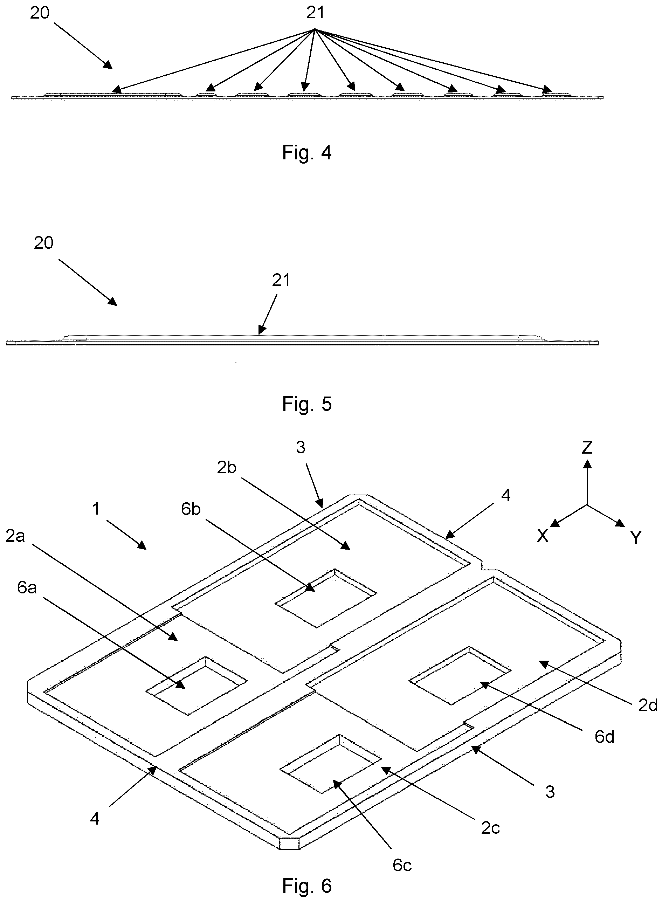

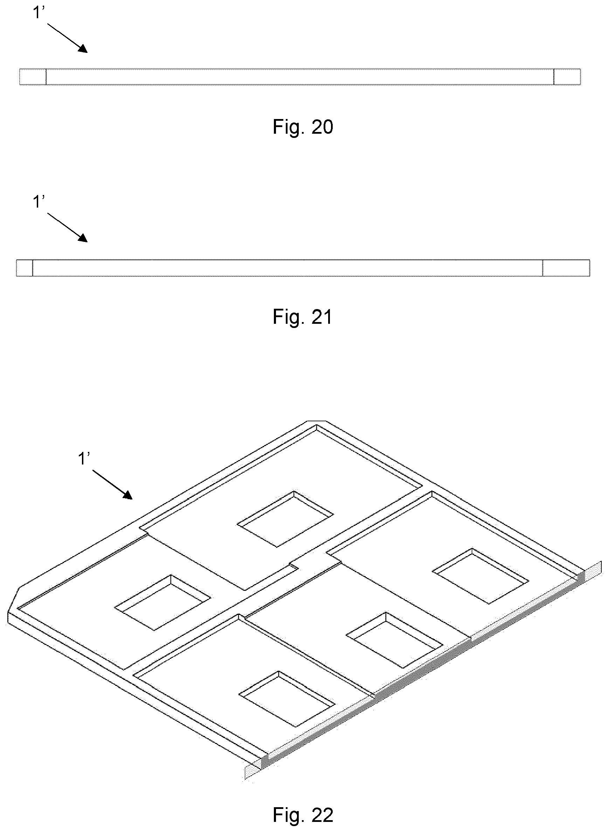

Two exemplary embodiments of the packaging 1, 1' for receiving more than one battery cover 20 of a vehicle of the present invention are described below with reference to the accompanying figures 6 to 22.

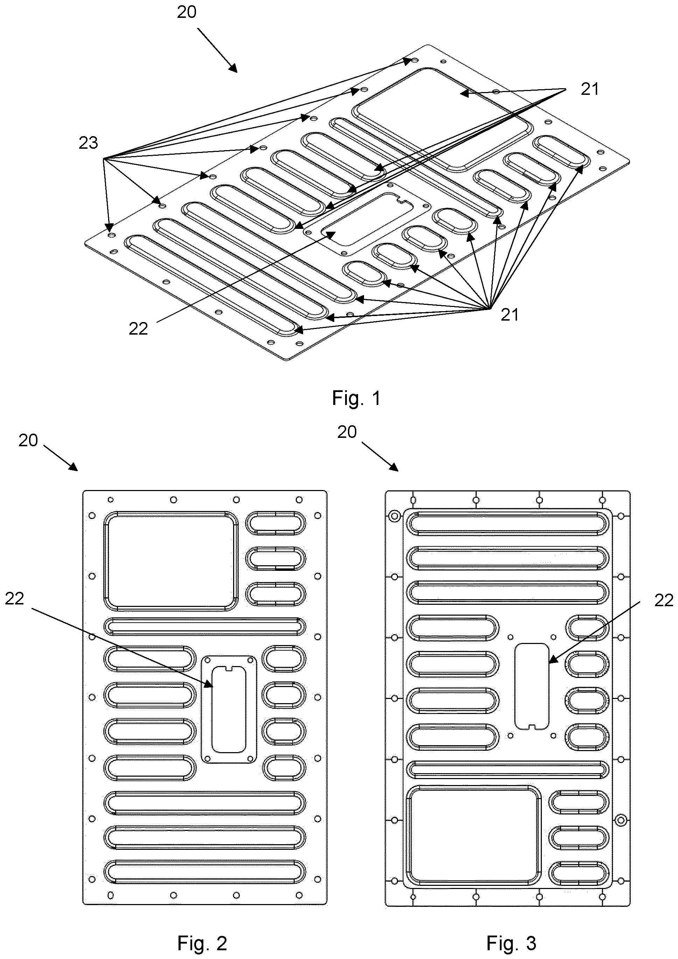

With reference to the first figures 1 to 5 attached, there are different views of a possible battery cover 20 for a vehicle to be packaged. This concrete embodiment of the battery cover 20 consists of a metal sheet with a rectangular contour and a thin thickness of a few millimetres. It has different ridges 21 at different places on its surface (see figures 4 and 5) to increase its rigidity, as well as a throughway opening 6, of rectangular dimensions, for the passage of the battery connector. In addition, it has a plurality of holes 23 distributed in the vicinity of the entire perimeter, to receive respective fastening elements of said cover 20 to the lower assembly of the battery.

With reference to the following figures 6 to 16 attached, there are different views of a first embodiment of the packaging 1 of the present invention provided with four recesses 2a, 2b configured to receive four battery covers 20 such as those of figures 1 to 6 and with a substantially rectangular contour with two major bases 3 and two minor bases 4.

For the purpose of the description, directions and orientations are referenced with the horizontal, transverse and vertical axes. The horizontal "X" axis refers to the direction of the major base 3 of the packaging sheet 1 of figures 1 to 6, the transverse "Y" axis refers to the direction perpendicular to the horizontal "X" axis (i.e. the direction of the minor base 4 of the packaging sheet 1 of figures 1 to 6) and the vertical "Z" axis refers to the direction perpendicular to the horizontal axis "X", i.e. the direction of the depth of the sheet 1.

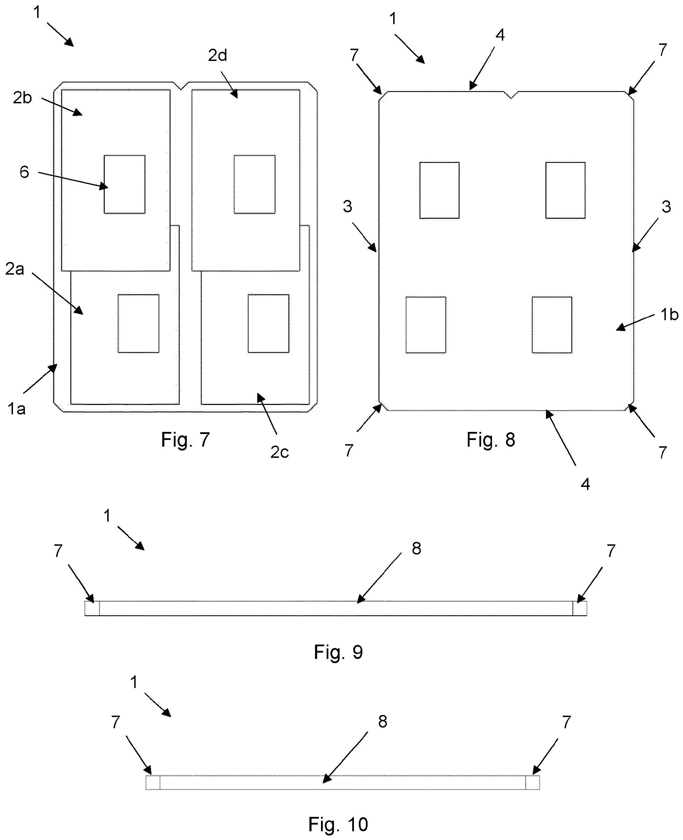

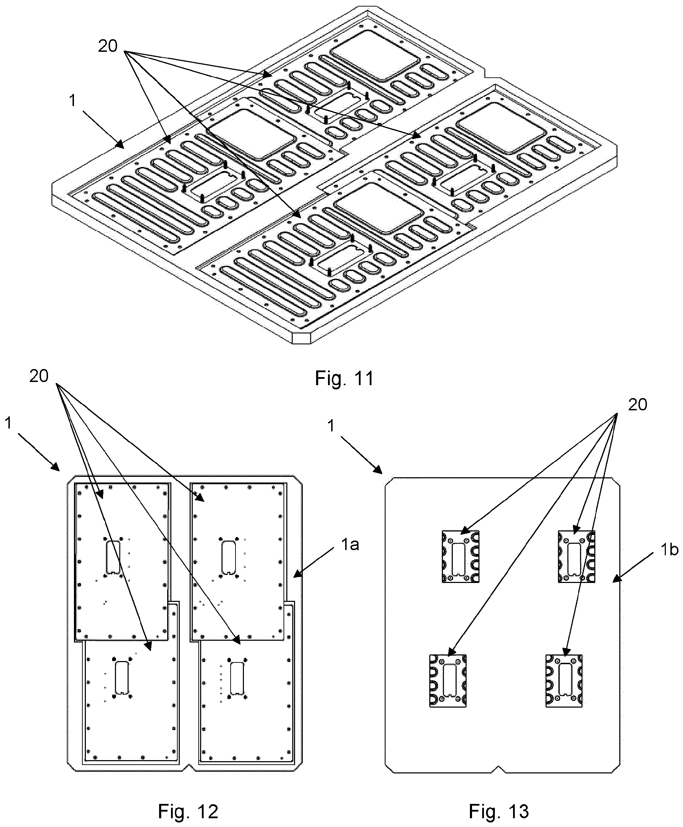

The packaging is illustrated in figures 6 to 10, while in figures 11 to 16 it is illustrated with the four covers 20 already arranged in each of the four recesses 2. The packaging 1 according to the first embodiment is formed by a cardboard sheet with a constant, low thickness of its outer side bases 8 and a substantially rectangular contour base formed by four major bases 3 and two minor bases 4. On the upper face 1a of the sheet 1 are provided four recesses 2a, 2b, 2c, 2d which occupy most of the space of the upper face 1a. Figures 9 and 10 show that the thickness of the outer part of the packaging sheet 1 is constant. In figures 6 to 8 it can be seen that the sheet 1 has four chamfered vertices 7. Figures 6 to 8 also show the existence of four throughway openings 6a, 6b, 6c, 6d each arranged in the central part of each of the four recesses 2a, 2b, 2c, 2d. The two recesses 2a, 2c that are in an upper position in figure 6 have a rectangular contour, while the two recesses 2b, 2d that are in a lower position have a rectangular contour, but with a thin lateral strip that extends in the "X" direction. It is clearly seen in figure 7 that the upper recess 2a of the first pair of recesses arranged on the left side of the figure is partially overlapped on the "X" and "Y" axes by the lower recess 2b, and that the second pair of recesses 2c, 2d arranged on the right side of the figure has the same partial overlap.

With reference to figures 11 to 16, it is observed that the four covers 20 are positioned on each of the four recesses 2a, 2b, 2c, 2d in a snug manner, that is, being perfectly fitted inside each recess 2a, 2b, 2c, 2d resting on each support surface 5a, 5b, 5c, 5d. In particular, with reference to figure 11, it is seen that the support surface 5b, 5d of the two recesses 2b, 2d that are in a lower position in figure 6 are arranged at a greater depth with respect to the upper face of the sheet with respect to the support surface 5a, 5c of the two recesses 2a, 2c that are in a upper position in figure 6; that is, that the support surface 5b, 5d of the two recesses 2b, 2d that are in a lower position have a lower height if we take as a starting point the lower face of the sheet. For this reason, once the covers 20 are positioned in the different four recesses 2a, 2b, 2c, 2d, the two covers 20 that are in a higher position are in a lower position with respect to the other two, so that they are partially overlapping in the "X-Y" plane.

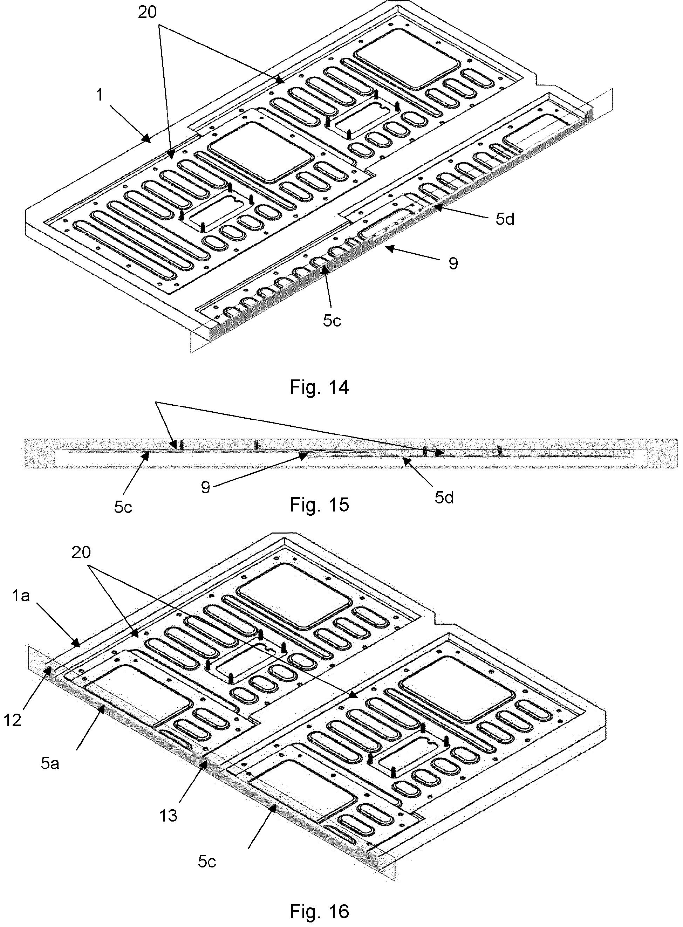

In particular, with reference to figure 15, it can be seen that the two adjacent covers 20 are placed at different heights, in such a way that they are very close but do not touch.

With reference in particular to figure 16, the profiles of the two recesses 2a, 2c which are in a lower position are shown in the figure. The straight profile step of the two recesses and the support surfaces 5a, 5c of these two recesses 2a, 2c which is located at a lower depth than the rest of the upper face 1a of the sheet can be seen. It can be seen that the support surfaces 5a, 5c of these two lower recesses 2a, 2c maintain their depth over the entire surface. Also shown is a central strip 13 of the packaging sheet 1 which is located at the same height as the perimeter strip 12.

Figure 14 shows the profile of the support surface 5 of a pair of recesses, wherein a step 9 of straight profile is appreciated and it can be seen that the support surface 5d of the recess 2d arranged at the top is at a greater depth than the support surface 5c of the recess arranged 2c at the bottom of this figure. It is this difference in depth that allows for an overlap of the covers in the "X-Y" plane.

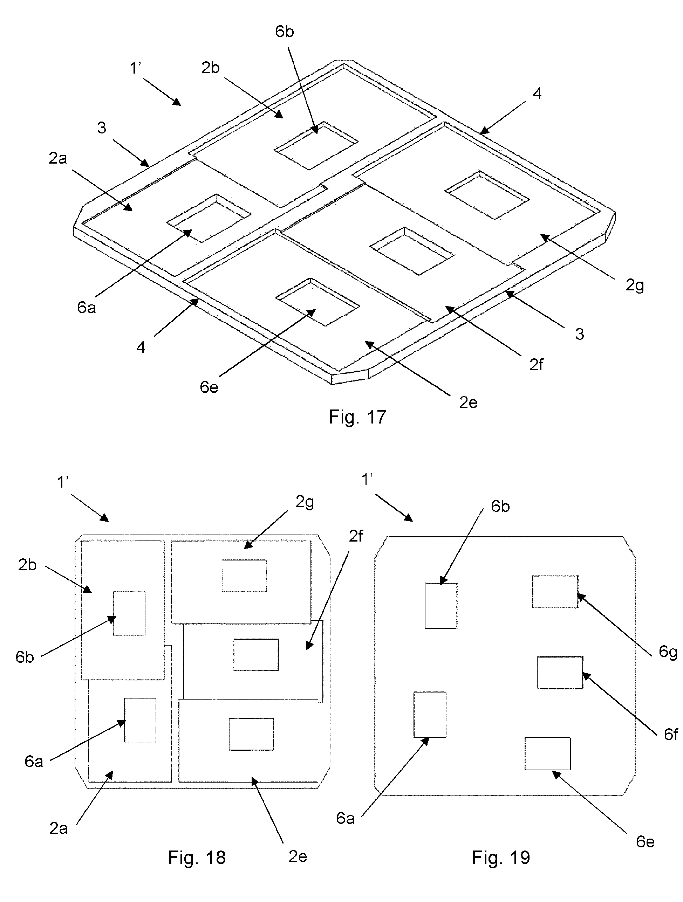

With reference to the last attached figures 17 to 22, different views are shown of a second embodiment of the packaging 1' of the present invention, comprising five recesses (2a, 2b, 2e, 2f, 2g) configured to receive five battery covers as those of figures 1 to 6.

Although reference has been made to a specific embodiment of the invention, it is evident to a person skilled in the art that the packaging for battery covers to be installed in a vehicle described herein is susceptible to numerous variations and modifications, and that all the aforementioned details can be replaced by other technically equivalent details, without departing from the scope of protection defined by the attached claims.

## Claims

1. A packaging (1, 1') for vehicle battery covers, comprising at least:
- a sheet or tray, provided on one of its faces (1a) with two or more recesses (2a, 2c; 2b, 2d), each recess (2) configured to house and fasten therein a respective cover (20), wherein each recess (2a, 2b, 2c, 2d) comprises a support surface (5a, 5b, 5c, 5d) for receiving a respective cover (20),
**characterized in that**
- the support surface (5a, 5c) of at least one first recess (2a, 2c) is arranged at a depth less than the depth of the support surface (5b, 5d) of a recess (2b, 2d) arranged in a position adjacent to the first recess (2a, 2c), so that when a first cover (20a, 20c) is arranged in the first recess (2a, 2c) and another respective cover (20b, 20d) in the adjacent recess (2b, 2d), the two covers (20a, 20b; 20c, 20d) are arranged at different heights, superimposed on each other, and
- the support surface (5a, 5c) of the first recess (2a, 2c) is offset in both the directions of the longitudinal "X" and transverse "Y" axes with respect to the support surface (5b, 5d) of the adjacent recess (2b, 2d);
so that when a respective cover (20a, 20c) is arranged in the first recess (2a, 2c) and another respective cover (20b, 20d) in the adjoining recess (2b, 2d) there is a partial overlap in the "X-Y" plane of these two adjacent covers (20a, 20b; 20c, 20d), which prevents the rotation of these two covers (20a, 20b; 20c, 20d) inside the packaging (1, 1') and fastens each cover (20a, 20b; 20c, 20d) in the "X-Y" plane in the packaging (1, 1').

2. The packaging (1, 1') for vehicle battery covers according to claim 1, wherein the partial overlap in the direction of the "X" axis of two covers arranged in two adjacent recesses is less than 50% of the size of the major side of the cover in the direction of the "X" axis and the partial overlap in the direction "Y" of two covers arranged in two adjacent recesses is more than 50% of the size of the minor side of the cover in the direction of the "Y" axis.

3. The packaging (1, 1') for vehicle battery covers according to claim 2, wherein the percentage of overlap of two covers (20) arranged in two adjacent recesses (2a, 2b; 2c, 2d; 2e, 2f; 2f, 2g) is lower in the direction of the "X" axis than the percentage of overlap in the direction of the "Y" axis.

4. The packaging (1, 1') for vehicle battery covers according to claim 1, wherein the sheet of the present invention has the face (1b) opposite to where the recess (2) are located formed by a flat surface.

5. The packaging (1, 1') for vehicle battery covers according to claim 1, wherein the packaging sheet has a substantially rectangular contour base with two major bases (3) and two minor bases (4).

6. The packaging (1, 1') for vehicle battery covers according to claim 5, wherein the packaging sheet has chamfered vertices (7).

7. The packaging (1, 1') for vehicle battery covers according to claim 5, wherein the packaging sheet has side bases (8) of low height compared to the length of the major bases (3) and minor bases (4).

8. The packaging (1, 1') for vehicle battery covers according to claim 1, wherein the sheet is made of corrugated cardboard.

9. The packaging (1, 1') for vehicle battery covers according to claim 1, wherein the sheet is made of honeycomb cardboard.

10. The packaging (1, 1') for vehicle battery covers according to claim 1, wherein the sheet is made of a plastic or recycled material.

11. The packaging (1, 1') for vehicle battery covers according to claim 1, wherein each recess (2) comprises a throughway opening (6), where, overlappingly, screws or other systems or elements of the cover (20) protruding on the "Z" axis are housed in said opening (6), so that said extra height is contained in the thickness of the packaging located in a higher position.

12. The packaging (1, 1') for vehicle battery covers according to claim 11, wherein the throughway opening (6) is a window of rectangular dimensions.

13. The packaging (1) for vehicle battery covers according to claim 1, wherein it comprises four recesses (2a, 2b, 2c, 2d) for receiving four covers (20).

14. The packaging (1') for vehicle battery covers according to claim 1, wherein it comprises five or more recesses (2a, 2b, 2e, 2f, 2g) for receiving five covers (20).

## Patentansprüche

1. Verpackung (1, 1') für Fahrzeugbatterieabdeckungen, mindestens umfassend:
- eine Platte oder Tablett, bereitgestellt auf einer seiner Seiten (1a) mit zwei oder mehr Aussparungen (2a, 2c; 2b, 2d), wobei jede Aussparung (2) konfiguriert ist, eine jeweilige Abdeckung (20) aufzunehmen und darin zu befestigen, wobei jede Aussparung (2a, 2b, 2c, 2d) eine Stützfläche (5a, 5b, 5c, 5d) zum Aufnehmen einer jeweiligen Abdeckung (20) umfasst,
**dadurch gekennzeichnet, dass**
- die Stützfläche (5a, 5c) mindestens einer ersten Aussparung (2a, 2c) in einer Tiefe angeordnet ist, die geringer ist als die Tiefe der Stützfläche (5b, 5d) einer Aussparung (2b, 2d), die in einer Position benachbart zu der ersten Aussparung (2a, 2c) angeordnet ist, so dass, wenn eine erste Abdeckung (20a, 20c) in der ersten Aussparung (2a, 2c) und eine weitere jeweilige Abdeckung (20b, 20d) in der benachbarten Aussparung (2b, 2d) angeordnet ist, die beiden Abdeckungen (20a, 20b; 20c, 20d) in unterschiedlichen Höhen übereinander angeordnet sind, und
- die Stützfläche (5a, 5c) der ersten Aussparung (2a, 2c) sowohl in Richtung der Längsachse "X" als auch der Querachse "Y" gegenüber der Stützfläche (5b, 5d) der benachbarten Aussparung (2b, 2d) versetzt ist;
so dass bei Anordnung einer jeweiligen Abdeckung (20a, 20c) in der ersten Aussparung (2a, 2c) und einer weiteren jeweiligen Abdeckung (20b, 20d) in der angrenzenden Aussparung (2b, 2d) eine teilweise Überlappung in der "X-Y"-Ebene dieser beiden benachbarten Abdeckungen (20a, 20b; 20c, 20d), die die Drehung dieser beiden Abdeckungen (20a, 20b; 20c, 20d) innerhalb der Verpackung (1, 1') verhindert und jede Abdeckung (20a, 20b; 20c, 20d) in der "X-Y"-Ebene in der Verpackung (1,1') befestigt.

2. Verpackung (1, 1') für Fahrzeugbatterieabdeckungen nach Anspruch 1, wobei die teilweise Überlappung in die Richtung der "X"-Achse von zwei in zwei benachbarten Aussparungen angeordneten Abdeckungen weniger als 50% der Größe der Hauptseite der Abdeckung in die Richtung der "X"-Achse und die teilweise Überlappung in die Richtung "Y" von zwei in zwei benachbarten Aussparungen angeordneten Abdeckungen mehr als 50 % der Größe der Schmalseite der Abdeckung in die Richtung der "Y"-Achse beträgt.

3. Verpackung (1, 1') für Fahrzeugbatterieabdeckungen nach Anspruch 2, wobei der Prozentsatz von Überlappung zweier in zwei benachbarten Aussparungen (2a, 2b; 2c, 2d; 2e, 2f; 2f, 2g) angeordneter Abdeckungen (20) in die Richtung der "X"-Achse geringer ist als der Prozentsatz der Überlappung in Richtung der "Y"-Achse.

4. Verpackung (1, 1') für Fahrzeugbatterieabdeckungen nach Anspruch 1, wobei die Platte der vorliegenden Erfindung die Seite (1b) aufweist, die der Aussparung (2) gegenüberliegt, die durch eine ebene Fläche gebildet ist.

5. Verpackung (1, 1') für Fahrzeugbatterieabdeckungen nach Anspruch 1, wobei die Verpackungsplatte eine im Wesentlichen rechteckige Konturbasis mit zwei Hauptbasen (3) und zwei Nebenbasen (4) aufweist.

6. Verpackung (1, 1') für Fahrzeugbatterieabdeckungen nach Anspruch 5, wobei die Verpackungsplatte abgeschrägte Scheitelpunkte (7) aufweist.

7. Verpackung (1, 1') für Fahrzeugbatterieabdeckungen nach Anspruch 5, wobei die Verpackungsplatte seitliche Basen (8) mit geringer Höhe im Vergleich zur Länge der großen Basen (3) und der kleinen Basen (4) aufweist.

8. Verpackung (1, 1') für Fahrzeugbatterieabdeckungen nach Anspruch 1, wobei die Platte aus Wellpappe besteht.

9. Verpackung (1, 1') für Fahrzeugbatterieabdeckungen nach Anspruch 1, wobei die Platte aus Wabenkarton hergestellt ist.

10. Verpackung (1, 1') für Fahrzeugbatterieabdeckungen nach Anspruch 1, wobei die Platte aus einem Kunststoff oder recycelten Material hergestellt ist.

11. Verpackung (1, 1') für Fahrzeugbatterieabdeckungen nach Anspruch 1, wobei jede Aussparung (2) eine Durchgangsöffnung (6) aufweist, in der überlappend Schrauben oder andere Systeme oder Elemente der Abdeckung (20), die auf die "Z"-Achse herausragen in der Öffnung (6) untergebracht sind, so dass diese zusätzliche Höhe in der Dicke der höher gelegenen Verpackung angeordnet ist.

12. Verpackung (1, 1') für Fahrzeugbatterieabdeckungen nach Anspruch 11, wobei die Durchgangsöffnung (6) ein Fenster mit rechteckigen Abmessungen ist.

13. Verpackung (1) für Fahrzeugbatterieabdeckungen nach Anspruch 1, wobei sie vier Aussparungen (2a, 2b, 2c, 2d) zur Aufnahme von vier Abdeckungen (20) enthält.

14. Verpackung (1') für Fahrzeugbatterieabdeckungen nach Anspruch 1, wobei sie fünf oder mehr Aussparungen (2a, 2b, 2e, 2f, 2g) zur Aufnahme von fünf Abdeckungen (20) enthält.

## Revendications

1. Emballage (1, 1') pour couvercles de batterie de véhicule, comprenant au moins :
- une feuille ou un plateau, pourvu(e) sur l'une de ses faces (1a) de deux évidements (2a, 2c ; 2b, 2d) ou plus, chaque évidement (2) étant configuré pour y loger et y fixer un couvercle respectif (20), dans lequel chaque évidement (2a, 2b, 2c, 2d) comprend une surface de support (5a, 5b, 5c, 5d) pour recevoir un couvercle respectif (20),
**caractérisé en ce que**
- la surface de support (5a, 5c) d'au moins un premier évidement (2a, 2c) est agencée à une profondeur inférieure à la profondeur de la surface de support (5b, 5d) d'un évidement (2b, 2d) agencé dans une position adjacente au premier évidement (2a, 2c), de sorte que lorsqu'un premier couvercle (20a, 20c) est agencé dans le premier évidement (2a, 2c) et un autre couvercle respectif (20b, 20d) dans l'évidement adjacent (2b, 2d), les deux couvercles (20a, 20b ; 20c, 20d) sont agencés à des hauteurs différentes, superposés l'un sur l'autre, et
- la surface de support (5a, 5c) du premier évidement (2a, 2c) est décalée à la fois dans les directions des axes longitudinal « X » et transversal « Y » par rapport à la surface de support (5b, 5d) de l'évidement adjacent (2b, 2d) ;
de sorte que lorsqu'un couvercle respectif (20a, 20c) est agencé dans le premier évidement (2a, 2c) et un autre couvercle respectif (20b, 20d) dans l'évidement voisin (2b, 2d), il existe un chevauchement partiel dans le plan « X-Y » de ces deux couvercles adjacents (20a, 20b ; 20c, 20d), qui empêche la rotation de ces deux couvercles (20a, 20b ; 20c, 20d) à l'intérieur de l'emballage (1, 1') et fixe chaque couvercle (20a, 20b ; 20c, 20d) dans le plan « X-Y » de l'emballage (1, 1').

2. Emballage (1, 1') pour couvercles de batterie de véhicule selon la revendication 1, dans lequel le chevauchement partiel dans la direction de l'axe « X » de deux couvercles agencés dans deux évidements adjacents est inférieur à 50 % de la taille du grand côté du couvercle dans la direction de l'axe « X », et le chevauchement partiel dans la direction « Y » de deux couvercles agencés dans deux évidements adjacents est supérieur à 50 % de la taille du petit côté du couvercle dans la direction de l'axe « Y ».

3. Emballage (1, 1') pour couvercles de batterie de véhicule selon la revendication 2, dans lequel le pourcentage de chevauchement de deux couvercles (20) agencés dans deux évidements adjacents (2a, 2b ; 2c, 2d ; 2e, 2f ; 2f, 2g) est inférieur dans la direction de l'axe « X » au pourcentage de chevauchement dans la direction de l'axe « Y ».

4. Emballage (1, 1') pour couvercles de batterie de véhicule selon la revendication 1, dans lequel la feuille de la présente invention présente la face (1b) opposée à l'endroit où l'évidement (2) est situé, formée par une surface plate.

5. Emballage (1, 1') pour couvercles de batterie de véhicule selon la revendication 1, dans lequel la feuille d'emballage présente une base de contour sensiblement rectangulaire avec deux bases principales (3) et deux bases secondaires (4).

6. Emballage (1, 1') pour couvercles de batterie de véhicule selon la revendication 5, dans lequel la feuille d'emballage présente des sommets chanfreinés (7).

7. Emballage (1, 1') pour couvercles de batterie de véhicule selon la revendication 5, dans lequel la feuille d'emballage présente des bases latérales (8) de faible hauteur en comparaison à la longueur des bases principales (3) et des bases secondaires (4).

8. Emballage (1, 1') pour couvercles de batterie de véhicule selon la revendication 1, dans lequel la feuille est réalisée en carton ondulé.

9. Emballage (1, 1') pour couvercles de batterie de véhicule selon la revendication 1, dans lequel la feuille est réalisée en carton en nid d'abeille.

10. Emballage (1, 1') pour couvercles de batterie de véhicule selon la revendication 1, dans lequel la feuille est réalisée en un matériau plastique ou recyclé.

11. Emballage (1, 1') pour couvercles de batterie de véhicule selon la revendication 1, dans lequel chaque évidement (2) comprend une ouverture traversante (6), où, en chevauchement, des vis ou d'autres systèmes ou éléments du couvercle (20) faisant saillie sur l'axe « Z » sont logés dans ladite ouverture (6), de sorte que ladite hauteur supplémentaire est contenue dans l'épaisseur de l'emballage situé dans une position plus élevée.

12. Emballage (1, 1') pour couvercles de batterie de véhicule selon la revendication 11, dans lequel l'ouverture traversante (6) est une fenêtre de dimensions rectangulaires.

13. Emballage (1) pour couvercles de batterie de véhicule selon la revendication 1, dans lequel il comprend quatre évidements (2a, 2b, 2c, 2d) pour recevoir quatre couvercles (20).

14. Emballage (1') pour couvercles de batterie de véhicule selon la revendication 1, dans lequel il comprend cinq évidements ou plus (2a, 2b, 2e, 2f, 2g) pour recevoir cinq couvercles (20).
